# EUROPEAN PATENT APPLICATION

(11) **EP 0 734 140 A2**
(43) Date of publication of application: **25.09.1996**
(21) Application number: 96830124.2
(22) Date of filing: 19.03.1996
(51) Int. Cl.: H04L 29/06

(54) **Satellite telecommunications system for remote access to internet**

(30) Priority: 22.03.1995 IT RM950167
(71) Applicant: SPACE ENGINEERING S.p.A., I-00155 Roma (IT)
(72) Inventor: Vernucci, Antonio, 00141 Rome (IT)
(74) Representative: Perrotta, Luciana, Dr.

(57) **Abstract**

Satellite telecommunications system for remote access, principally to Internet, basically consisting of a number of portable terminals T1...Tn (Fig.4), one or more satellite nodes (NS), a satellite (S), suitably configured for connection to the Internet network. The most important aspect of the system is the terminal T, which can be inserted in a normal PC. The terminal's antenna can be housed either in the terminal itself or, depending on its configuration, around ther perimeter of the PC-terminal. The invention is aimed primarily at Internet users and makes an RF link possible from wherever one is located in the satellite coverage area.

## Description

The invention regards a satellite telecommunications system which can offer an access service principally to the Internet network but also to other "packet" networks, for users who are located anywhere within the satellite's coverage area. This system consists of a large number of small, and hence very portable, *satellite terminals* and of a *satellite node* connection with which takes place via an artificial satellite.

As *Internet* services have rapidly established themselves and it is envisaged that demand for this type of service will continue to increase, the invention is a technological advance which can be offered to *Internet* users. The invention's access service can be seen as an alternative to the *Internet* access services currently available via terrestrial communications networks. The present access services typically envisage the connection to *Internet* by means of a telephone modem (on a circuit or packet network). This type of connection is not always easy to realise and when realised the times involved are not always quick. Furthermore, they may not be realised in all operating conditions. The drawbacks described above are overcome by the invention presented which also offers another important advantage which is that of being able to transmit auxiliary information simultaneously to all the network's users or to allow the users to transmit other types of data (these aspects will be described in more detail below). In addition, the architecture of the system proposed may allow a considerable reduction in connection costs.

This invention can be compared to that of the cellular telephone vis-a-vis the fixed-wire telephone. The invention in fact makes use of the broadcasting properties typical to satellites to allow access to *Internet* services via a portable satellite terminal fitted with the modules needed to furnish the connection from and to any geographical point. Said connection can be obtained regardless of the position of the owner of the *satellite terminal* while its functioning is more flexible and user costs undoubtedly lower. Furthermore, thanks to the afore-mentioned broadcasting properties, the satellite system offered by the invention can also allow additional services such as the transmission to satellite terminals of auxiliary information which cannot be easily obtained from terrestrial access and the sending, by the sateliite terminals, of other types of data. Perhaps it should be pointed out here that other satellite systems are today already operational or in the process of being realised or defined, but unfortunately they do not satisfy the service requirements for various reasons, including the inefficiency of the access technique, the inadequacy of the frequency bands employed, or the excessive limitation of transmission speed, etc. As regards the frequencies employed, it will be seen below that those chosen for the invention have a host of advantages.

The invention presented, considering the *satellite terminal* and *satellite node* as a unit, is aimed principally at professional users who need to use *Internet* services, above all when they are far from their place of work or home. Real-time notification of the arrival of new written information (such as e-mail) at one's home mailbox and the possibility to read at any moment, again via *Internet,* any mail which has arrived during one's absence is an integral part of the service offered.

The present *Internet* access service generally consists of a telephone connection via modem and, as any user knows, such a connection is not always easy to achieve, and the times involved are not as short as one would wish for a series of reasons. Furthermore, said connection is not possible under all operating conditions.

The invention presented not only improves the flexibility of the connection but also offers another important advantage, namely that of being able to simultaneously transmit auxiliary information to all the network users and that of allowing users to send certain types of data (these aspects will be described in greater detail below). In addition, as mentioned above, the system's set-up generates a significant reduction in connection costs.

In order to better comprehend the invention, we shall explain what we mean, in general, by "Internet network", "satellite terminal" and "satellite node".

"Internet network". Internet is the name generally used to refer to a digital communications network, which today operates on a worldwide scale, to which access is granted to all types of user and the use of which, as a means for exchanging information, is currently free and accessible to all. *Internet* in turn consists of a large number of data communication networks connected to each other by computers which carry out the necessary interface functions. *Internet* is designed to offer multimedia data transfer services (messages, sound and images) which use consolidated communications protocols (which conform to specific norms). All this makes the use of this service of interest to the user. To give an idea of the capacity of *Internet* we shall summarise some of the services offered:
E-Mail: allows one to send messages (or files) to another user of the network. The messages sent take only a short time to reach the recipient's mailbox. F.T.P. (File Transfer Protocol): allows one to take files from databases (FTP sites) which support this type of service.
Telnet: allows one to run programs on a remote computer which offers such a service.
W.W.W. (World Wide Web): allows one to consult hypertext pages (Web Pages) which contain information of interest to the user and within which one can rapidly switch to consult other pages with the aim of facilitating the user's search for the information required.
Satellite Terminal: is an active element of the network which is responsible for communicating with the satellite, processing and acting as an interface for the user's data.
Satellite node: is an active element of the network which carries out the satellite communications, processing and interfacing functions for the communication channels it uses.

Hence, as mentioned above, the system comprises a small, very portable *satellite terminal* which can be used by users who are located at any point within the satellite's coverage area, and by a *satellite node* which communicates via satellite with the aforementioned satellite terminal.

The version of the satellite terminal currently preferred by the Inventor consists of a device which accesses the satellite, of a PC and of an antenna which may be found in the market and is small enough to be portable. Said device, which in turn basically consists of an electronic circuit which is controlled by resident software, can be integrated in the PC; this also contains a software which realises the system's operating protocols.

A summary description of the invention is given below, reference is made to the figures enclosed.

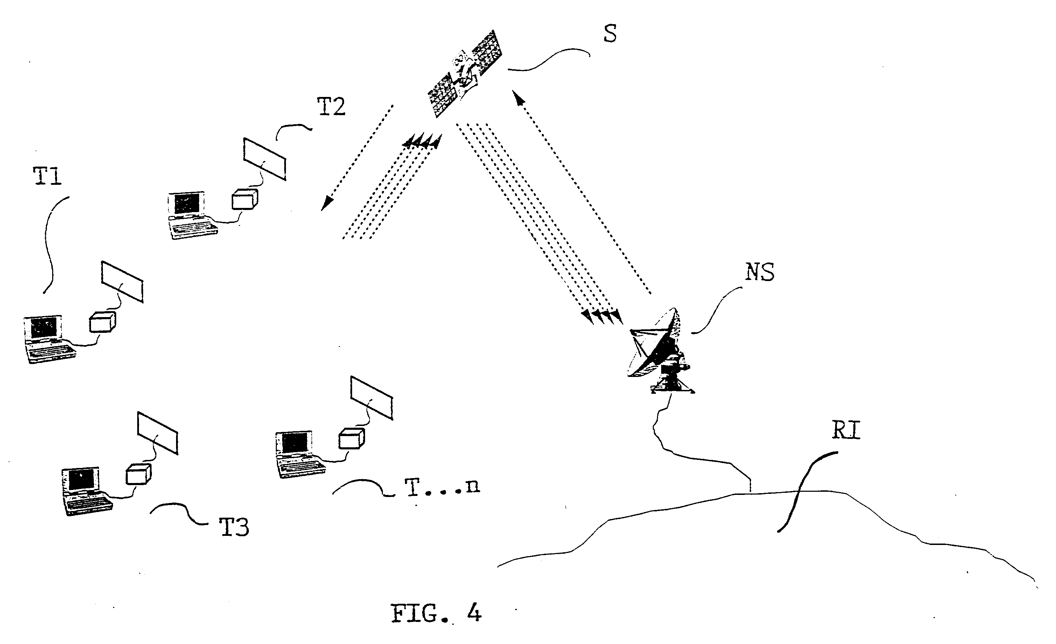

**Fig.1** - Diagram of the Satellite Terminal. The diagram shows:
   ***a*** PC, which houses: *1* telecommmunications control software; *2* interface card;
   ***b*** modulation subsystem consisting of: *3* PC interface; *4* controller; *5* demodulator; *6* modulator;
   ***c*** RF subsystem consisting of: *7* incoming frequency converter; *8* outgoing frequency converter; *9* receiver; *10* transmitter; *11* antenna;

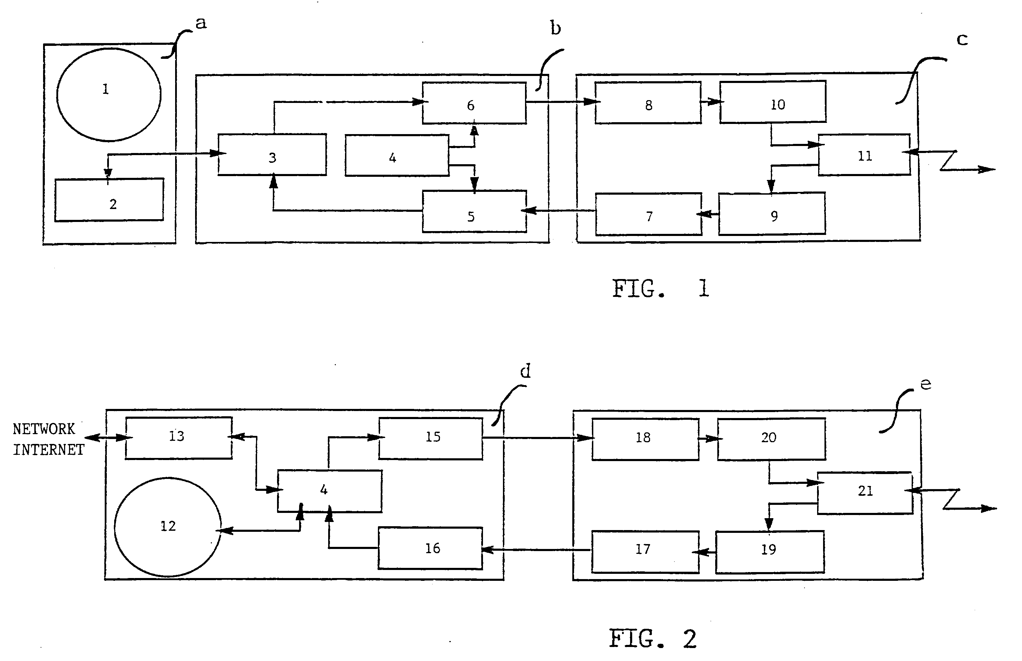

**Fig.2** - Diagram of the Satellite Node. The diagram shows:
   ***d*** base band subsystem consisting of: *12* communications control software; *13 Internet* network interface; *14* communications processor; *15* modulator; *16* demodulator;
   ***e*** RF subsystem consisting of: *17* incoming frequency converter; *18* outgoing frequency converter; *19* receiver; *20* transmitter; *21* dish antenna.

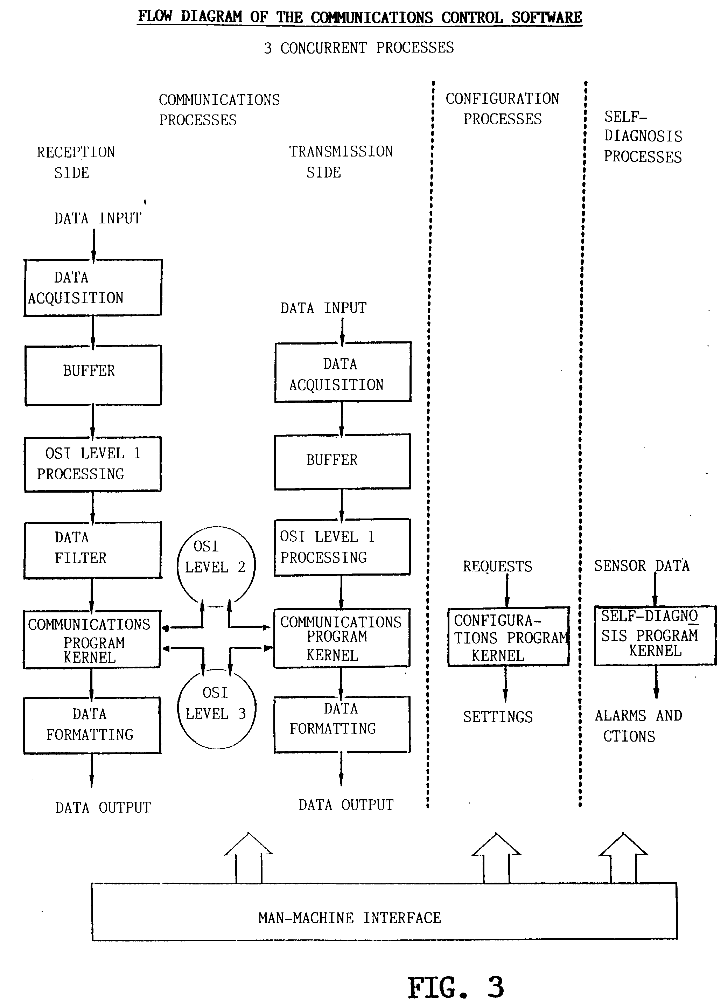

**Fig.3** - Simplified flow diagram of the main functional blocks which implement the communications control software programs. These software programs are the "communications control software" and are housed in block **12** of **Fig.2** and in block **2** of **Fig. 1**.
**Fig.4** - Diagram of the context in which the invention operates which shows:
   **S** one or more satellites; **NS** a satellite node; **T1**, **T2, T3, T...n** a number of satellite terminals according to the number of users.
The satellites, satellite node and satellite terminals interact with *Internet* as follows:
Satellite terminal users - Satellite - Satellite node - Internet
Internet - Satellite mode - Satellite - Satellite terminal users.

The most important part of the invention for which patent cover is being requested, is therefore the system consisting of the Satellite Terminals (**Fig.1**) and the Satellite Nodes (**Fig.2**)*.*
The Satellite Terminal (**Fig.1**) consists of three main subsystems:
- The RF Subsystem ***c*** consisting of an antenna ***11*** normally flat and foldable (so as not to increase the volume of the package to be transported) whose structure can house: a RF Transmitter ***10*** realised obviously with a solid-state technology with its frequency converter ***8***; a RF receiver ***9*** both of which are preferably integrated with the antenna structure; and the RF receiver, realised with gallium arsenide technology, with its frequency converter ***7***, also preferably integrated with the antenna structure. The afore-mentioned converters are necessary for the interface with the modulation subsystem ***b*** at a convenient frequency value.
- The Modulation Subsystem consists of a modulator ***6***, a demodulator ***5***, a controller (of the modulator and demodulator) ***4*** which determines the operative modality which could also partially carry out communication control functions should they require execution times which are not feasible in the PC software and an interface to the PC which adapts the data structure operating in the subsystem to the standardised structure for PCs.
- The PC subsystem which, in addition to the hardware and software functionalities normally found in the PC itself (operating system, processor, volatile and mass memory, peripheral unit functionalities, etc.) also includes an appropriate interface card ***2*** to the modulation subsystem (should it be necessary as as result of the fact that the standardised interfaces for PCs may not be suited to the purpose) and communications control software ***1*** which may also be run concurrently with as other applications software which the user may use if he decides to adopt a multitasking operating system (such as Microsoft Windows). As already mentioned, the modulation subsystem may also take the form of a card to be inserted in the PC so as to make it smaller and hence easier to transport.
The satellite node (**Fig.2**) consists of two main subsystems which may also be realised in a single unit:
- RF subsystem ***e*** consisting of an antenna ***21*** usually of the dish type the diameter of which depends on the characteristics of the satellite; of a RF transmitter ***20*** (realised with a traveling wave tube or solid-state amplifier according to the power required) with frequency converter ***17***; of a RF converter ***19*** (with gallium arsenide components) with frequency converter ***18****.* The afore-mentioned converters ***17*** and ***18*** of the RF subsystem are needed for the interface with the based band subsystem **d** at a convenient frequency value.
- Base band subsystem ***d*** consisting of a modulator ***15****,* a demodulator ***16*** which can demodulate the numerous carriers; a communications processor ***14*** which generates and processes the communications data structures into the appropriate formats and which uses a communications control software ***12*** to be able to fulfill the necessary processing and interface functions ***13*** which adapt the subsystem's internal structures to those operating on the Internet network. As more information flows in the *satellite terminal - satellite node* direction than in the opposite direction, it is proposed to exploit the transmission resources which may be available in the *satellite node - satellite terminal* direction to allow the satellite terminal to send to the satellite node other types of data which are not specifically related to *Internet* services and which may have real or quasi-real time requirements such as telemedicine, telesurveillance, digital video with reduction of redundancy, etc.). For such applications it may make sense to also envisage the existence of other *satellite nodes* with a data reception capability only which are located at specific points and hence enable one to optimise the overall costs of the service.
With regard to **Fig.4**, the satellite terminals communicate in a *bidirectional* manner with a fixed central station (the satellite node) which carries out the necessary interface functions on both the satellite and Internet sides. The satellite node also supports all those applications which allow the satellite terminals to use *Internet* services with modalities similar to those obtained with access to *Internet* via terrestrial networks and to support the additional services offered by satellite access. For the best adaptation to the characteristics of the *Internet* services, it is envisioned that the communications via satellite are of the packet type, this term being taken to mean the technique by which the link is actually used only during the periods when there is information to be exchanged between the satellite terminal and the satellite node. The access system typically consists of:
- a single radio carrier in the *satellite node - satellite terminal* direction which transports, using time division techniques, the information for the various satellite terminals;
- numerous frequency-division carriers in the *satellite terminal - satellite node* direction which are shared, again with time division, among the *satellite terminals* which transmit information to the satellite node.

It is envisaged that the system be realised in the 1.5 - 1.7 GHz frequency band. The choice of these bands allows:
- unhindered operation without causing or experiencing interference from other systems;
- the use of consolidated technologies which allow the production of satellite terminals with low risk and costs;
- simplicity of design for the telecommunications system;
- the obtainment of the correct aiming of the satellite terminals's antenna to the satellite without excessive difficulties, which improves the ease of use of the terminal for the user.

However, the use of other frequency bands would not lead to any significant change in the services envisioned.

The exchange of information is centralised on a single satellite node (or on a very limited number of said nodes) which allows:
- reduction of service costs, as regards both investment and operational costs, thanks to the limitation of the number of facilities, which does not increase the information transmission costs on the *Internet* network, as such distribution has zero-cost for the user;
- the maximum sharing among the satellite terminals of the resources for the transport of information to the terminals themselves, thus allowing the maximisation of the information transport speed for a given system capacity.

The satellite transmission mode is of packet type which allows:
- maximisation of the efficiency of the resources used and hence minimisation of the service costs;
- access to a greater number of terminals;
- the connection can be charged on the basis of the volume of data exchanged, thus increasing the service's attraction vis-a-vis those supplied by those systems whose tariffs are based exclusively on the time the resources are used.

The average information transmission speed, via the sateliite system, is such as to support *Internet* services with delays which are not dissimilar to those experienced when access is via a telephone modem. This ensures compatibility with all the services offered by *Internet* (**E-mail, FTP, Telnet, WWW, etc.**).

One of the distinguishing characteristics of satellite systems, i.e., that of radio broadcasting, is exploited in order to send auxiliary information; this should be considered as an additional service true and proper which would be difficult to supply should access to *Internet* be realised via terrestrial connections. The possible advantages include:
- real-time notification of new E-mail at one's mailbox. This would be achieved by periodically broadcasting the list of satellite terminals for which E-mail has arrived. Thus the user would be immediately informed of any new messages for him/her simply by leaving the terminal on, hence without having to make additional calls and hence costs. If necessary, the user can then connect, again via satellite, to pick up the new E-mail.
- newletters of general interest or aimed at a limited group of users (for example, employees of the same company).

The system requires only a frequency band with limited width, this facilitating coordination with other systems which use the same frequency bands.

As mentioned above, the satellite terminal is based on a portable PC with the addition of one or more peripherals which provide the functionalities needed for the remote access to the satellite. It is envisaged that the antenna will be flat and its size will be such as not to significantly increase the overall volume of the equipment. In fact, if the antenna (perhaps folded) is given a specific configuration, for example fitting the horizontal size of the portable PC, the user could carry all the equipment needed easily as if he was carrying a normal portable PC separating, whenever necessary, the antenna from the actual PC.

## Claims

1. Satellite telecommunications system for remote access to Internet and other "packet" networks and for the broadcasting of auxiliary information, characterized by the fact that it basically consists of (**Fig.4**) a portable satellite terminal (**T1, T2....Tn**) and a satellite node (**NS**) which are connected by an artificial satellite (**S**).

2. Satellite telecommunications system for remote access to Internet and other "packet" networks and for the broadcasting of auxiliary information, as per **Claim 1**, characterized by the fact that said satellite terminal (**T1...n**) basically consists of (**Fig.1**) a PC (**a**), a modulation subsystem (**b**) and a RF subsystem (**c**).

3. Satellite telecommunications system for remote access to Internet and other "packet" networks and for the broadcasting of auxiliary information, as per **Claim 1**, characterized by the fact that said satellite node (**SN - Fig.4**) basically consists of (**Fig.2**) a base band subsystem (**d**) and a RF subsystem (**e**).

4. Satellite telecommunications system for remote access to Internet and other "packet" networks and for the broadcasting of auxiliary information, as per **Claim 2**, characterized by the fact that (**Fig.1**) said PC (**a**) basically consists of the PC itself, communications control software (**1**) and an interface card (**2**).

5. Satellite telecommunications system for remote access to Internet and other "packet" networks and for the broadcasting of auxiliary information, as per **Claim 2**, characterized by the fact that (**Fig.1**) the modulation system (**b**) basically consists of a PC interface (**3**), a controller (**4**), a demodulator (**5**) and a modulator (**6**).

6. Satellite telecommunications system for remote access to Internet and other "packet" networks and for the broadcasting of auxiliary information, as per **Claim 2**, characterized by the fact that (**Fig.2**) the RF subsystem (**c**) basically consists of a incoming frequency converter (**7**), an outgoing frequency converter (**8**), a receiver (**9**) a transmitter (**10**) and an antenna (**11**).

7. Satellite telecommunications system for remote access to Internet and other "packet" networks and for the broadcasting of auxiliary information, as per **Claim 3**, characterized by the fact that said base band system (**d**) of the satellite node (**NS**) basically consists of communications control software (**12**), an *Internet* interface (**13**) a communications processor (**14**), a modulator (**15**) and a demodulator (**16**).

8. Satellite telecommunications system for remote access to Internet and other "packet" networks and for the broadcasting of auxiliary information, as per **Claim 3**, characterized by the fact that said RF subsystem (**e**) basically consists of a incoming frequency converter (**17**), an outgoing frequency converter (**18**), a receiver (**19**), a transmitter (**20**) and a satellite dish (**21**).

9. Satellite telecommunications system for remote access to Internet and other "packet" networks and for the broadcasting of auxiliary information, as per **Claims 7** and **4**,characterized by the fact that said units **1** and **12**, which are located in the PC (**a**)(**Fig.1**) and in the base band subsystem of the satellite node (**d**)(**Fig.2**) respectively, are basically similar (**Fig.3**) consisting of a reception side, transmission side, configuration processes, and self-diagnosis processes.

10. Satellite telecommunications system for remote access to Internet and other "packet" networks and for the broadcasting of auxiliary information, as per **Claim 9**, characterized by the fact that control functions can be also carried out by a software program (**Fig.3**).

11. Satellite telecommunications system for remote access to Internet and other "packet" networks and for the broadcasting of auxiliary information, as per **Claims 1, 2, 4 and 5**, characterized by the fact that the satellite terminal is basically portable and can contain in a single package roughly the size of a normal portable PC: the PC itself (**a**), the modulation subsystem (**b**) and the RF subsystem (**c**).

12. Satellite telecommunications system for remote access to Internet and other "packet" networks and for the broadcasting of auxiliary information, as per **Claim 11**, characterized by the fact that antenna of the RF subsystem can be produced configured to match the perimeter of the PC container so as to form a single unit which can be separated so required.

13. Satellite telecommunications system for remote access to Internet and other "packet" networks and for the broadcasting of auxiliary information, as per the above Claims, characterized by the fact that access to the satellite mainly uses packet transmission techniques.

14. Satellite telecommunications system for remote access to Internet and other "packet" networks and for the broadcasting of auxiliary information, as per the above Claims, characterized by the fact that it can be used, at its best, in the frequency band range 1.5 - 1.7 GHz.

15. Satellite telecommunications system for remote access to Internet and other "packet" networks and for the broadcasting of auxiliary information, as per the above Claims, characterized by the fact that satellite terminals can be used both in Italy and abroad even though they are using a satellite node located in Italy.
